# EUROPÄISCHE PATENTANMELDUNG

(11) **EP 3 981 645 A1**
(43) Veröffentlichungstag der Anmeldung: **13.04.2022**
(21) Anmeldenummer: 21200464.2
(22) Anmeldetag: 01.10.2021
(51) Int. Cl.: B60P 3/025, E04H 3/28

(54) **MOBILE EVENTBÜHNE UND VERFAHREN ZUM AUFBAU DER MOBILEN EVENTBÜHNE**

(30) Priorität: 09.10.2020 DE 102020126556
(71) Anmelder: ACG Sound & Light Veranstaltungstechnik UG (haftungsbeschränkt) & Co. KG, 93449 Waldmünchen (DE)
(72) Erfinder: GRUBER, Alfons, 93449 Waldmünchen (DE); GRUBER, Christian, 93449 Waldmünchen (DE)
(74) Vertreter: Reichert & Lindner Partnerschaft Patentanwälte

(57) **Zusammenfassung**

Es ist eine mobile Eventbühne (1) und ein Verfahren zum Aufbau einer mobilen Eventbühne (1) offenbart. Die mobile Eventbühne (1) ist auf einem Trailer (2) angeordnet, so dass diese einfach zum jeweiligen Aufstellort bewegt werden kann. Die Bühnenfläche (10) wird durch die klappbaren Bordwände (21) und die Ladefläche (20) des Trailers (2) definiert. Mit einem Hebemittel (3) kann das Dach (4) angehoben werden, das auf der Ladefläche (20) des Trailers (2) gefaltet vorliegt. Jedes der beiden Hebemittel (3) greift gegenüberliegenden Enden eines Mittelteils (42) eines Daches (4) der Eventbühne (1) an. In der Endposition des Hebemittels (3) ist das bogenförmige Dach (4) aus dem Mittelteil (42) und zwei seitliche angrenzenden Dachelementen (41) gebildet.

## Beschreibung

Die Erfindung betrifft eine mobile Eventbühne. Insbesondere betrifft die Erfindung eine mobile Eventbühne, die auf einem Trailer angeordnet ist und zumindest zwei klappbare Bordwände besitzt. Im ausgeklappten Zustand bilden die klappbaren Bordwände zusammen mit einer Ladefläche des Trailers eine Bühnenfläche. Ein Dach wird im ausgeklappten Zustand von Stützen getragen, die sich auf der Bühnenfläche abstützen.

Ferner betrifft die Erfindung ein Verfahren zum Aufbau einer mobilen Eventbühne. Die mobile Eventbühne befindet sich im zusammengeklappten Zustand auf einem Trailer in einer Transportstellung. In der Transportstellung des Trailers sind zwei klappbare Bordwände angeklappt und auf einer Ladefläche des Trailers ist ein Dach im zusammengeklappten Zustand vorhanden.

Das europäische Patent EP 1 803 873 B1 betrifft eine bewegliche Bühne mit einem Fahrgestell, einer Bühnenplattform und einer auf dem Fahrgestell angeordneten Dachkonstruktion. Die Dachkonstruktion lagert zu beiden Seiten auf einer Stützvorrichtung, die in der Höhe verstellbar ist. Die Dachkonstruktion weist mehrere parallel zueinander verlaufende Traversen auf, wobei zumindest die äußeren Traversen seitlich verschieblich von den Stützvorrichtungen aufnehmbar sind. Die Stützvorrichtung umfasst jeweils zwei teleskopierbare Säulen, die beabstandet zueinander an dem Fahrgestell befestigt sind.

Die deutsche Patentanmeldung DE 19 639 012 A1 beschreibt eine auf einfache Art und Weise transportable und aufbaubare, mobile Drehbühne, deren Aufbau sich auch für nur kurzwährende Veranstaltungen lohnt. Die Bühnenplattform der Drehbühne ist auf einem Kraftfahrzeuganhänger drehend antreibbar gelagert und wenigstens teilweise permanent, auch während des Straßentransportes, mit dem Kraftfahrzeuganhänger verbunden.

Die deutsche Gebrauchsmusterschrift DE 203 19 261 U1 betrifft eine fahrbare Bühne mit einem Fahrgestell, einer daran befestigten, rechteckigen Bodenwand und zwei an gegenüberliegenden Seiten der Bodenwand über Scharniere befestigte, rechteckige Seitenwände. An den beiden Stirnseiten der Bodenwand sind über Scharniere schwenkbare, rechteckige Stirnwände angebracht. In den Ecken zwischen den aufgeklappten Stirnwänden und Seitenwänden ist je eine rechteckige Eckwand eingesetzt.

Die deutsche Übersetzung DE 695 03 878 T2 des europäischen Patents EP 0 737 599 B1 betrifft einen Anhänger, der aus einem länglichen Fahrgestell mit einem zentralen Boden und einem Dach besteht. Das Dach ist an mindestens zwei Teleskopmasten an den Enden des Anhängers befestigt, sowie Seitenwände, die an den Rändern von Dach und Boden angelenkt sind. Es verfügt über zwei miteinander verbundene mechanische Systeme, die mit zwei Bereitstellungsphasen verbunden sind. Die erste Phase ist die Verlängerung der Teleskopmasten und der Einsatz der Seitenbodenplatten, die zweite Phase ist das Anheben des Daches und der Einsatz der Dachseitenwände. Die Auslösemechanismen befinden sich in den Teleskopmasten, von denen jeder, einen am Anhänger befestigten unteren Pfosten, einen inneren Schieber und Riemenscheiben für Kabel umfasst, die mit dem ausfahrbaren Dach und den Bodenplatten verbunden sind. Dieser hier beschriebene Mechanismus des Aufbaus der Bühne ist mechanisch kompliziert.

Die US-Patentanmeldung US 2004/0123529 A1 offenbart ein in sich geschlossenes mobiles Bühnensystem für Aufführungen im Freien, das mit einem leichten Abschleppfahrzeug transportiert und durch eine Person allein aufgebaut werden kann. Der mobile Bühnenanhänger umfasst ein Fahrgestell mit zwei Decks, einschließlich eines Oberdecks und eines Unterdecks, die vertikal vom Oberdeck beabstandet sind. An jeder Seitenkante ist ein Flügeldeck mit dem Fahrgestell verbunden. Die Flügeldecks können ferner selektiv angeklappt werden, damit das Bühnensystem im Allgemeinen gleich der Breite des Fahrgestells des Anhängers ist.

Das US-Patent US 5,327,698 A betrifft eine mobile aufstellbare Bühne, die mit einem Anhänger transportiert werden kann. Mindestens eine Kurbelanordnung wird verwendet, um die Bühne durch Anheben mindestens einer Seitenwandplatte und der miteinander verbundenen Dachplatte zu errichten, so dass eine Bühne mit einem geneigten Dach, das über den Bühnenboden hinausragt, eingesetzt werden kann. Der Bühnenboden kann durch Hinzufügen von Bodenplatten vergrößert werden. Die europäische Patentanmeldung EP 1 754 845 A1 offenbart ein mobiles Bühnensystem, das aus zwei gleichen und gegenüberliegenden Plattformen besteht, die auf Rädern montiert sind und die sich alle problemlos zu einem großen, für Großveranstaltungen nutzbaren Bau zusammenfügen lassen. Der Aufbau ist mit entsprechenden Stützen ausgestattet, um Leuchten, Lautsprecher und andere Elemente, die bei Veranstaltungen benötigt werden, anzubringen. Das Bühnensystem wird zusätzlich durch eine Faltkonstruktion abgedeckt.

Die US Patentanmeldung US 2016 / 0 009 213 A1 beschreibt ein mobiles Bühnengerüst mit mehreren beabstandeten Säulenstrukturen, das eine erste und eine zweite in sich geschlossene Einheit bildet. Beide Einheiten werden voneinander getrennt, wenn das mobile Bühnengerüst für den Transport vollständig demontiert wird. Die erste Einheit umfasst eine gelenkige Bodenstruktur und die zweite Einheit umfasst eine gelenkige Dachstruktur. Beide Aufbauten befinden sich, bei vollständig montiertem mobilem Bühnengerüst, in aufgeklappter Arbeitsstellung und in zusammengeklappter Transportstellung, wenn das mobile Bühnengerüst für den Transport vollständig zerlegt ist.

Die aktuell auf dem Markt verfügbaren Bühnentrailer sind nicht mit handelsüblichen Traversensystemen kombinierbar. Die Bestückung der aufgebauten Bühne mit Licht- und Tonequipment muss meist in einer Höhe von ca. 2,5 - 3 m erfolgen. Dies bedingt eine Absturzgefahr für die Personen, die den Aufbau durchführen. Außerdem existiert beim Aufbau und auch beim Abbau der Bühne eine hohe Geräuschbelastung.

Der Erfindung liegt die Aufgabe zugrunde, eine Eventbühne zu schaffen, die sich durch kurze Auf- und Abbauzeiten auszeichnet, die Auf- und Abbaugeräusche minimiert, Unfallgefahren beim Auf- und Abbau minimiert und einen sicheren, risikofreien Einbau von Bühnenequipment ermöglicht.

Diese Aufgabe wird durch eine mobile Eventbühne gelöst, die die Merkmale des Anspruchs 1 umfasst.

Der Erfindung liegt die weitere Aufgabe zugrunde, ein Verfahren zum Auf- und Abbau einer Eventbühne zu schaffen, das sich durch kurze Auf- und Abbauzeiten auszeichnet, minimierte Auf- und Abbaugeräusche, minimierte Unfallgefahren beim Auf- und Abbau und einen sicheren, risikofreien Einbau von Bühnenequipment auszeichnet.

Diese Aufgabe wird durch ein Verfahren zum Aufbau einer mobilen Eventbühne gelöst, das die Merkmale des Anspruchs 8 umfasst.

Gemäß einer möglichen Ausführungsform ist eine mobile Eventbühne auf einem Trailer angeordnet. Der Trailer besitzt zwei klappbare Bordwände, die im ausgeklappten Zustand zusammen mit einer Ladefläche des Trailers eine Bühnenfläche bilden. Ein Dach für die mobile Eventbühne steht im ausgeklappten Zustand auf Stützen, die sich auf der Bühnenfläche abstützen. An einem ersten Ende und einem zweiten Ende des Trailers ist jeweils ein Hebemittel mit einem Hubgestänge vorgesehen. Das Hebemittel ist in einer Bodenkonstruktion des Trailers verbaut. Das Dach besteht aus einem Mittelteil und an dem Mittelteil jeweils angrenzende seitliche Dachelemente. Die Hubhalterung eines jeden Hebemittels wirkt mit dem Mittelteil zusammen zum Anheben des Dachs.

Vorteil der Erfindung ist, dass man eine kompakte und leicht transportable Bühnenkonstruktion mit zusammenklappbarer Überdachung hat, die einen schnellen und leisen Auf- und Abbau ermöglicht, sowie, niedrige Arbeitshöhen und eine hohe Traglast der Dachkonstruktion für die technischen Einbauten aufweist. Hinzu kommt, dass der Aufbau von einer einzigen Person durchgeführt werden kann, da auch keine zusätzlichen Werkzeuge benötigt werden. Der Auf- und Abbau kann nach einer kurzen Einweisung durch jede Person erfolgen, da keine besonderen Vorkenntnisse erforderlich sind.

Gemäß einer Ausführungsform hat jedes der Dachelemente zwei Ansatzstellen für je eine Stütze, an die die Stützen, wenn das jeweilige Dachelement z.B. durch einen Bolzen verriegelt und gesichert ist, an den zwei Ansatzstellen einhängbar ist. Jede Stütze ist mit den Dachelementen schwenkbar verbunden.

Der Vorteil ist, dass die Stützen beim fortlaufenden Abheben des Daches langsam auf die Ansatzstellen der Dachelemente hin schwenken. Diese Art und Weise führt zu einer weiteren Minimierung der Auf- und Abbaugeräusche.

Gemäß einer möglichen Ausführungsform besitzt jede Stütze, an einen der Ansatzstellen gegenüberliegenden Enden, Räder oder Rollen. Beim Anheben des Daches in eine Endposition bewegen sich die Stützen mit den Rädern oder Rollen über die Bühnenfläche.

Die Räder oder Rollen haben den Vorteil, dass die Auf- und Abbaugeräusche weiter minimiert werden und eine Beschädigung der Bühnenoberfläche durch die Stützen vermieden wird.

Am Trailer sind mehrere höhenverstellbare Bodenstützen angebracht. An jeder Bordwand sind mehrere schwenkbare und höhenverstellbare Bordwandstützen angebracht. Mit den Bodenstützen und den Bordwandstützen kann die gesamte Bühnenfläche abgestützt und nivelliert werden.

Gemäß einer vorteilhaften Ausführungsform der Eventbühne sind zumindest das Dach und die Stützen aus handelsüblichen Traversen aufgebaut, die alle bereits vormontiert und auf dem Trailer an den erforderlichen Stellen vorhanden sind. Die Verbindung kann durch Stecktechnik erfolgen, so dass keine Werkzeuge erforderlich sind. Bevorzugt ist, dass das Dach der Eventbühne bogenförmig und mit einer Plane abgedeckt ist. Die Plane des Daches schützt die Bühnenfläche vor Witterungseinflüssen. Die Plane des Daches wird durch an den Traversen gespannten Bändern, die Stahlseile oder Gummibänder sind können, unterstützt, so dass sich bei Regen auf dem Dach keine Wasseransammlungen bilden. Ferner kann man mit den handelsüblichen Traversen jederzeit und ohne Sonderbauteile Erweiterungen der Eventbühne ermöglichen.

Das erfindungsgemäße Verfahren zeichnet sich dadurch aus, dass zunächst die Bordwände heruntergeklappt werden und so, aus der Ladefläche und den zwei Bordwänden, eine Bühnenfläche gebildet wird. Höhenverstellbare Bodenstützen des Trailers und schwenkbare und höhenverstellbare Bordwandstützen der beiden Bordwände werden derart eingestellt, dass die Bühnenfläche nivelliert und abgestützt wird. Anschließend werden die Hebemittel betätigt, wobei je ein Hebemittel an einem Mittelteil des Dachs angreift. Das Dach selbst ist auf dem Mittelteil und den zwei schwenkbar mit dem Mittelteil verbundenen seitlichen Dachelementen aufgebaut. Diese ganze Konstruktion wird angehoben und die ausschwenkenden Dachelemente klappen automatisch auseinander und werden dann mit Bolzen gesichert. Jeweils eine Stütze wird an je eine Ansatzstelle der seitlichen Dachelemente eingehängt. Gemäß einer bevorzugten Ausführungsform besitzt jedes Dachelement zwei Ansatzstellen. Die Hebemittel heben das Dach in eine Endstellung, in der das Dach zumindest von den Stützen getragen wird.

Das Verfahren hat den Vorteil, dass der Aufbau bzw. Abbau von einer Person in ca. 30 min durchgeführt werden kann.

Gemäß einer Ausführungsform des Verfahrens, wird das Dach, wenn es gesichert ist, von der Bühnenoberfläche (Grundfläche) aus bestückt. Die Arbeitshöhe beträgt ca. 1,5 - 1.8 m.

Dies hat den Vorteil, dass dadurch eine Minimierung und Verhütung von Unfallgefahren (Absturz beim Einbringen von Material in die Bühne bzw. das Dach) vermieden wird.

Die, an den Ansatzstellen der seitlichen Dachelemente, eingehängten Stützen schwenken im Laufe des Anhebens des Dachs durch das Hebemittel auf die Ansatzstellen hin. Das Dach wird dann zumindest von den Stützen getragen.

Das Dach der Eventbühne wird nicht, wie branchenüblich, von unten nach oben geklappt, sondern von oben nach unten, was eine muskuläre Entlastung mit sich bringt, da das Dach mit Stahlseilen oder Gummibänder und Gasdruckfedern vorgespannt ist und sich selbständig entfaltet.

Des Weiteren wird das Dach (komplette Dachkonstruktion), welches aus einer handelsüblichen Traversenkonstuktion besteht, mit zwei Hebemitteln, welche Gabelhochhubmasten sind, z.B. von einer Höhe von 1,2 m, über dem Aufstellboden nach oben, in eine Endhöhe von ca. 4 m gefahren.

Das Einsatzgebiet der Eventbühne ist vielfältig und für jede Art von Veranstaltung, wie z.B. Kultur- Vereins- und Stadtfeste, Messestand, Kundgebungen, Firmenfeiern, Partyevents und Auftritten von Bands, geeignet.

Anhand der beigefügten Zeichnungen werden nun die Erfindung und ihre Vorteile durch Ausführungsbeispiele näher erläutert, ohne dadurch die Erfindung auf das gezeigte Ausführungsbeispiel zu beschränken. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Es zeigen im Einzelnen:
- **Figur 1**: eine schematische Rückansicht eines Trailers einer mobilen Eventbühne, bei der die einzelnen Bestandsteile der Eventbühne in der Transportstellung sind;
- **Figur 2**: eine schematische Seitenansicht des Trailers mit darauf vollständig aufgebauten Eventbühne;
- **Figur 3**: eine schematische Seitenansicht des Trailers mit der in der Transportstellung befindlichen Bühnenfläche der Eventbühne;
- **Figur 4**: eine schematische Draufsicht auf den Trailer mit der ausgeklappten Bühnenfläche der Eventbühne;
- **Figur 5**: eine perspektivische Ansicht der mobilen Eventbühne in der Transportstellung;
- **Figur 6**: eine perspektivische Ansicht der mobilen Eventbühne, bei der die Bordwände des Trailers entlang der Seitenwände ausgeklappt sind;
- **Figur 7**: eine perspektivische Ansicht der mobilen Eventbühne, bei der das Dach der mobilen Eventbühne teilweise angehoben ist;
- **Figur 8**: eine perspektivische Ansicht der mobilen Eventbühne, bei der das Dach teilweise angehoben und die Träger für das Dach eingehängt sind; und
- **Figur 9**: eine perspektivische Ansicht der mobilen Eventbühne in der errichteten Stellung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die Figuren stellen lediglich Ausführungsbeispiele der Erfindung dar, ohne jedoch die Erfindung auf die dargestellten Ausführungsbeispiele zu beschränken.

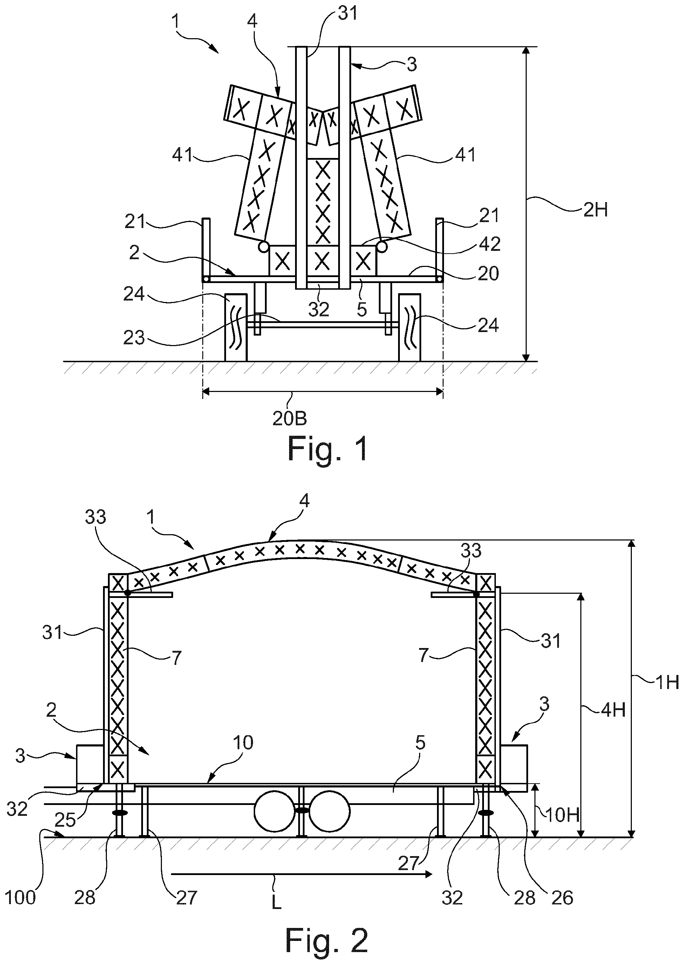

**Figur 1** zeigt eine schematische Rückansicht eines Trailers 2 einer mobilen Eventbühne 1, bei der die einzelnen Bestandsteile der Eventbühne 1 in der Transportstellung sind. Der Trailer 2 besteht im Wesentlichen aus einer Ladefläche 20 und zwei seitlichen Bordwänden 21. Die Ladefläche 20 ruht auf mindestens einer Achse 23 mit zwei Rädern 24, mittels der der Trailer 2 von einem Zugfahrzeug (nicht dargestellt) bewegt werden kann. Das Dach 4 der mobilen Eventbühne 1 liegt im Transportzustand auf der Ladefläche 20 des Trailers 2 auf. Bei der hier dargestellten Ausführungsform umfasst das Dach 4, in der Transportstellung, zwei sich in Längsrichtung L (siehe Figur 2) des Trailers 2 erstreckende Dachelemente 41, die über ein sich in Längsrichtung L des Trailers 2 erstreckendes Mittelteil 42 schwenkbar verbunden sind. An dem Mittelteil 42 greift ein Hebemittel 3 an, mit dem das Dach 4 angehoben werden kann.

Das Hebemittel 3 kann gemäß einer möglichen Ausführungsform als elektro-hydraulischer Hubwagen ausgebildet sein. Das Hebemittel umfasst ein Bodenteil 32, das in einer Bodenkonstruktion 5 des Trailers 2 verbaut ist, und ein Hubgestänge 31, an dem eine Hubhalterung 33 (siehe Figur 2) verschieblich entlang des Hubgestänges 31 angebracht ist. Der Trailer 2 weist zusammen mit der mobilen Eventbühne 1 (im Transportzustand) eine Gesamthöhe 2H auf.

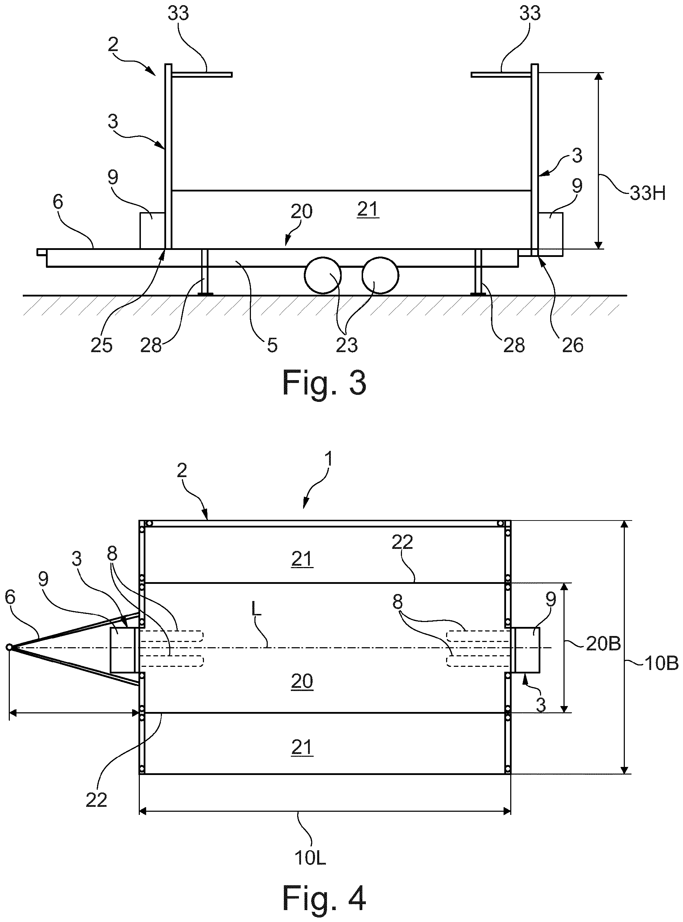

**Figur 2** zeigt eine schematische Seitenansicht des Trailers 2 mit der darauf vollständig aufgebauten Eventbühne 1. Am ersten Ende 25 und am zweiten Ende 26 des Trailers 2 ist jeweils das Hebemittel 3 in der Mitte der Breite 20B der Ladefläche 20 des Trailers 2 (siehe Figur 1) angebracht. Das Hebemittel 3 ist mit dem Bodenteil 32 in der Bodenkonstruktion 5 des Trailers 2 verbaut. In der hier gezeigten Darstellung sind die beiden Hubhalterungen 33, die auch als Hubgabel ausgebildet sein kann, der beiden Hebemittel 3 an dem jeweiligen Hubgestänge 31 bis zu einer Höhe 4H (vom Boden ausgehend gemessen) ausgefahren. Die Hubhalterungen 33 tragen das entfaltete Dach 4 in der Höhe 4H, das, in der hier dargestellten Ausführungsform, ein Bogendach ist. Das Bogendach reicht dann bis zu einer maximalen Höhe 1H. Die beiden Bordwände 21 (siehe Figur 1) sind ausgeklappt und bilden zusammen mit der Ladefläche 20 (siehe Figur 1) die Bühnenfläche 10 (siehe auch Figur 4), die sich in einer Höhe 10H (vom Boden ausgehend gemessen) befindet. Die Bordwände 21 werden von den Bordwandstützen 27 getragen bzw. unterstützt. Der Trailer 2 selbst wird von den Bodenstützen 28 getragen bzw. unterstützt. Das Dach 4 wird von den Stützen 7 und der Hubhalterung 33 getragen, die am Mittelteil 42 des Dachs 4 angreift (nicht dargestellt).

**Figur 3** eine schematische Seitenansicht des Trailers 2, bei dem keine Aufbauten bzw. Bestandteile für die Eventbühne 1 auf dem Trailer 2 vorgesehen sind. Der Trailer 2 umfasst eine Bodenkonstruktion 5, die mit einer Deichsel 6 verbunden ist. In der hier dargestellten Ausführungsform umfasst der Trailer 2 zwei Achsen 23. Ebenso ist die Bodenkonstruktion 5 mit mehreren höhenverstellbaren Bodenstützen 28 versehen, mit denen der Trailer 2 bzw. die Eventbühne 1 am Aufstellort stabilisiert und nivelliert werden kann. Am ersten Ende 25 der Ladefläche 20 und am zweiten Ende der Ladefläche 20 ist jeweils das Hebemittel 3 vorgesehen. Bei der Darstellung der Figur 3 befinden sich die Hubhalterungen 33 auf einer Höhe 33H.

**Figur 4** eine schematische Draufsicht auf den Trailer 2 mit der ausgeklappten Bühnenfläche 10 der Eventbühne 1. Hierzu sind die Bordwände 21, die über ein Scharnier 22 mit der Ladefläche 20 verbunden sind, ausgeklappt. Das Scharnier ist ein Spezialscharnier, das trittsicher ist und keine Unfallgefahr auf der Bühnenfläche 10 darstellt bzw. die Ebenheit der Bühnenfläche 10 stört. Die Ladefläche 20 besitzt eine Breite 20B und bildet einen Teil der Bühnenfläche 10 der Eventbühne 1. Bei den ausgeklappten Bordwänden 21 besitzt die Bühnenfläche 10 der Eventbühne 1 eine Breite 10B. Die Bühnenfläche 10 besitzt eine Länge 10L. Die Hebemittel 3 sind mittig zur Breite 20B der Ladefläche 20 angeordnet und stehen sich in der Längsachse L des Trailers 2 gegenüber. Gemäß einer Ausführungsform der Erfindung kann das Hebemittel 3 ein elektro-hydraulischer Gabelhubwagen sein, bei dem die Rollen bzw. Räder entfernt sind. Die Standgabeln 8 des Gabelhubwagens sind unterhalb der Bühnenfläche 10 in der Bodenkonstruktion 5 des Trailers 2 verbaut. Jedem Hebemittel 3 bzw. Gabelhubwagen ist eine elektro-hydraulische Einheit 9 zugeordnet, mit der das Hebemittel 3 bzw. der Gabelhubwagen betätigt werden kann.

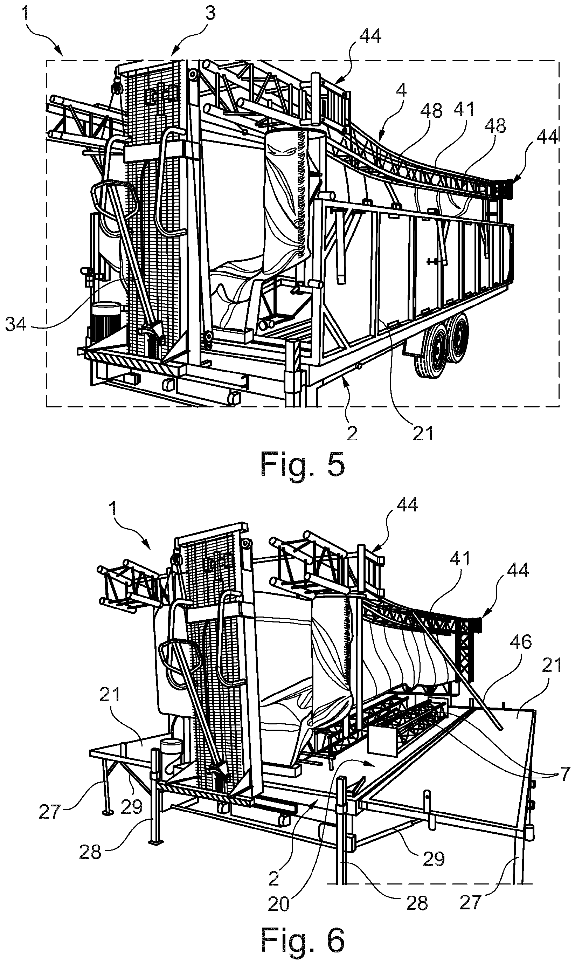

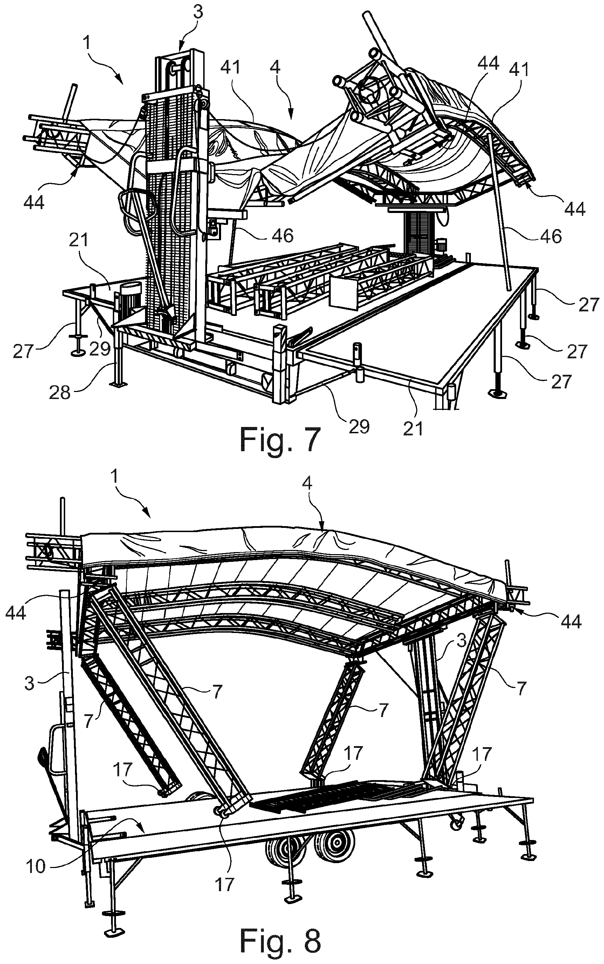

**Figur 5** zeigt eine perspektivische Ansicht der mobilen Eventbühne 1 in der Transportstellung bzw. in derjenigen Konfiguration, in der die Eventbühne am Aufstellort bzw. Eventort mittels des Trailers 2 angeliefert wird. Die Bordwände 21 sind beidseits hochgeklappt. Zwischen den Bordwänden 21 befindet sich das Dach 4 im zusammengefalteten Zustand. Wie aus der schematischen Darstellung der Figur 1 ersichtlich ist stehen die beiden bogenförmigen Dachelemente 41 auf der Ladefläche 10 des Trailers 2. Die beiden Dachelemente 41 sind schwenkbar an dem Mittelteil 42 (nicht dargestellt) angelenkt, das auf der Ladefläche 20 des Trailers 2 aufliegt. Jeder der bogenförmigen Dachelemente 41 besitzt mindestens zwei Ansatzstellen 44, an die die Stützen 7 (siehe Figur 8) schwenkbar angelenkt werden können. Das Hebemittel 3 ist ferner mit einer Handbetätigung 34 versehen, um zumindest das Anheben des Dachs 4 zu ermöglichen, wenn der Strom für die elektro-hydraulische Einheit 9 (siehe Figur 3 und 4) ausfällt. Wie aus Figur 5 und den nachfolgenden Figur 6 bis 9 ersichtlich ist, ist das Dach 4 aus handelsüblichen Traversen 48 aufgebaut.

**Figur 6** ist eine perspektivische Ansicht der mobilen Eventbühne 1 in einer anfänglichen Phase des Aufbaus der Eventbühne 1. Die Bordwände 21 des Trailers 2 sind ausgeklappt. Der Trailer 2 und die Bordwände 21 sind durch Bodenstützen 28 bzw. Bordwandstützen 27 am Aufstellort abgestützt. Ferner sind die Bordwände 21 über Gasdruckdämpfer 29 mit dem Trailer 2 verbunden, was das Anheben und Absenken der Bordwände 21 erleichtert bzw. unterstützt. Die Dachelemente 41 stützen sich mittels einer Hilfsstütze 46 (diese wird nur beim Abbau benötigt aufgrund der Massenverhältnisse) an den jeweiligen Bordwänden 21 ab. Die Stützen 7 für das Dach 4 liegen auf der Ladefläche 20 des Trailers 2.

**Figur 7** zeigt eine perspektivische Ansicht der mobilen Eventbühne 1 beim Abbau, bei der das Dach 4 der mobilen Eventbühne 1 durch das Hebemittel 3 teilweise angehoben ist. In dieser Stellung stehen die Hilfsstützen 46, die die Dachelemente 41 stützen, fast senkrecht zu den Bordwänden 21. In dieser Stellung kann von der Bühnenfläche 10 aus, falls erforderlich, Eventequipment (nicht dargestellt) am Dach 4, ohne auf Leitern steigen zu müssen, montiert werden. In dieser Stellung können auch die Stützen 7 an den dafür vorgesehenen Ansatzstellen 44 des Dachs 4 angelenkt werden.

**Figur 8** zeigt eine perspektivische Ansicht der mobilen Eventbühne 1, bei der das Dach 4 durch die beiden Hebemittel 3 fast in die Endstellung verbracht ist. Die Stützen 7 sind an den Ansatzstellen 44 angelenkt und können im Zuge des Anhebens des Daches 4 immer mehr auf die Ansatzstellen 44 zuschwenken. An einem den Ansatzstellen 44 gegenüberliegenden Ende der Stützen 7 sind Räder bzw. Rollen 17 angebracht, mit denen die Stützen 7 beim Anheben des Dachs 4 auf der Bühnenoberfläche 10 rollen können. Dadurch wir die Bühnenoberfläche 10 geschont und durch die Schwenkbewegung der Stützen 7 nicht beschädigt.

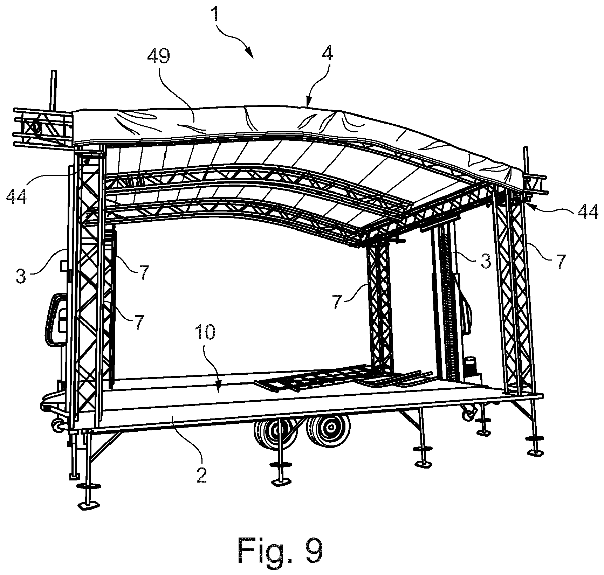

**Figur 9** zeigt eine perspektivische Ansicht der mobilen Eventbühne 1 in der errichteten Endposition. Das Dach 4, welches von einer Plane 49 überzogen ist, wird von den Stützen 7 und den Hebemitteln 3 gehalten. Die Stützen 7 liegen an den Ansatzstellen 44 an und stützen sich auf der Bühnenfläche 10 an.

Es wird angenommen, dass die vorliegende Offenbarung und viele der darin erwähnten Vorteile durch die vorhergehende Beschreibung verständlich werden. Es ist offensichtlich, dass verschiedene Änderungen in Form, Konstruktion und Anordnung der Bauteile durchgeführt werden können, ohne von dem offenbarten Gegenstand abzuweichen. Die beschriebene Form ist lediglich erklärend und es ist die Absicht der beigefügten Ansprüche, solche Änderungen zu umfassen und einzuschließen. Dementsprechend sollte der Umfang der Erfindung nur durch die beigefügten Ansprüche beschränkt sein.

### Bezugszeichenliste

- 1: mobile Eventbühne
- 1H: Höhe
- 2: Trailer
- 2H: Gesamthöhe
- 3: Hebemittel
- 4: Dach
- 4H: Höhe
- 5: Bodenkonstruktion
- 6: Deichsel
- 7: Stütze
- 8: Standgabel
- 9: elektro-hydraulische Einheit
- 10: Bühnenfläche
- 10B: Breite
- 10H: Höhe
- 10L: Länge
- 17: Rad / Rollen
- 20: Ladefläche
- 20B: Breite
- 21: Bordwand
- 23: Achse
- 24: Rad
- 25: Erstes Ende
- 26: Zweites Ende
- 27: Bordwandstütze
- 28: Bodenstütze
- 29: Gasdruckdämpfer
- 31: Hubgestänge
- 32: Bodenteil
- 33: Hubhalterung
- 33H: Höhe
- 34: Handbetätigung
- 41: Dachelement
- 42: Mittelteil
- 44: Ansatzstelle
- 46: Hilfsstütze
- 48: Traverse
- 49: Plane
- L: Längsachse / Längsrichtung

## Patentansprüche

1. Mobile Eventbühne (1), die auf einem Trailer (2) angeordnet ist und zumindest zwei klappbare Bordwände (21) aufweist, die im ausgeklappten Zustand zusammen mit einer Ladefläche (20) des Trailers (2) eine Bühnenfläche (10) bilden und ein Dach (4), das im ausgeklappten Zustand auf Stützen (7), die sich auf der Bühnenfläche (10) abstützen, steht,
**dadurch gekennzeichnet, dass**
• jeweils ein Hebemittel (3) mit einem Hubgestänge (31) an einem ersten Ende (25) und einem zweiten Ende (26) des Trailers (2) vorgesehen sind und ein Bodenteil (32) des Hebemittels (3), das in einer Bodenkonstruktion (5) des Trailers (2) verbaut ist; und
• das Dach (4) aus einem Mittelteil (42) besteht und an das Mittelteil (42) jeweils ein seitlich angrenzendes Dachelement (41) angebracht ist, wobei die Hubhalterung (33) eines jeden Hebemittels (3) zum Anheben des Daches (4) mit dem Mittelteil (42) zusammenwirkt.

2. Mobile Eventbühne (1) nach Anspruch 1, wobei jedes der Dachelemente (41) zwei Ansatzstellen (44) für je eine Stütze (7) umfasst, an die die Stützen (7) einhängbar und somit mit den Dachelementen (41) schwenkbar verbunden sind.

3. Mobile Eventbühne (1) nach Anspruch 2, wobei jede Stütze (7) an einem der Ansatzstellen (44) gegenüberliegenden Ende mit Rädern (17) versehen ist, damit sich beim Anheben des Dachs (4) in eine Endposition die Stützen (7) mit den Rädern (17) über die Bühnenfläche (10) bewegen.

4. Mobile Eventbühne (1) nach einem der vorangehenden Ansprüche, wobei am Trailer (2) mehrere höhenverstellbare Bodenstützen (28) angebracht sind.

5. Mobile Eventbühne (1) nach einem der vorangehenden Ansprüche, wobei an jeder Bordwand (21) mehrere schwenkbare und höhenverstellbare Bordwandstützen (27) angebracht sind.

6. Mobile Eventbühne (1) nach einem der vorangehenden Ansprüche, wobei die Bordwände (21) über ein Scharnier (22) mit der Ladefläche (20) verbunden sind.

7. Mobile Eventbühne (1) nach einem der vorangehenden Ansprüche, wobei das Dach (4) bogenförmig, aus handelsüblichen Traversen aufgebaut und mit einer Plane (49) abgedeckt ist.

8. Verfahren zum Aufbau einer mobilen Eventbühne (1), umfassend einen Trailer (2) mit zwei klappbaren Bordwänden (21), einer Ladefläche (20) und einem Dach (4), das auf dem Trailer (2) im zusammengeklappten Zustand in einer Transportstellung vorhanden ist,
**gekennzeichnet durch die folgenden Schritte:**
• dass die Bordwände (21) heruntergeklappt werden und aus der Ladefläche (20) und den zwei Bordwänden (21) eine Bühnenfläche (10) gebildet wird;
• dass höhenverstellbare Bodenstützen (28) des Trailers (2) und schwenkbare und höhenverstellbare Bordwandstützen (27) der beiden Bordwände (21) derart eingestellt werden, dass die Bühnenfläche (10) nivelliert und abgestützt wird;
• dass je ein Hebemittel (3), das an einem Mittelteil (42) des Dachs (4) angreift, und das Dach (4), das aus dem Mittelteil (42) und zwei schwenkbar mit dem Mittelteil (42) verbundenen seitlichen Dachelementen (41) besteht, angehoben wird und die ausschwenkenden Dachelemente (41) in der ausgeschwenkten Stellung gesichert werden;
• dass jeweils eine Stütze (7) an je eine Ansatzstelle (44) der seitlichen Dachelementen (41) eingehängt wird; und
• dass die Hebemittel (3) das Dach (4) in eine Endstellung heben, in der das Dach (4) zumindest von den Stützen (7) getragen wird.

9. Verfahren nach Anspruch 8, wobei das Dach (4), wenn dessen Dachelemente (41) gesichert sind, von der Bühnenoberfläche (10) aus bestückt wird.

10. Verfahren nach einem der Ansprüche 8 bis 9, wobei die an den Ansatzstellen (44) der seitlichen Dachelemente (41) eingehängten Stützen (7) im Laufe des Anhebens des Dachs (4) auf die Ansatzstellen (44) hin schwenken.
